# EUROPEAN PATENT APPLICATION

(11) **EP 2 487 881 A1**
(43) Date of publication of application: **15.08.2012**
(21) Application number: 11152992.1
(22) Date of filing: 02.02.2011
(51) Int. Cl.: H04M 1/57, H04M 1/725, H04M 1/2745

(54) **Communication device and method for displaying message information when receiving a call**

(71) Applicant: Research In Motion Limited, Waterloo, ON N2L 3W8 (CA)
(72) Inventor: Hymel, James Allen, Waterloo Ontario N2L 5Z5 (CA)
(74) Representative: Patel, Binesh

(57) **Abstract**

Disclosed is a method (900) of displaying message information associated with a message when receiving a call at a device comprising: receiving (902) the call at the device from a caller; receiving (904) caller information at the device in association with the call; automatically retrieving (906) from storage, in response to receiving the caller information, at least one message, the at least one message comprising text content; and automatically displaying (908) on a display screen message information associated with the at least one message.

## Description

### FIELD

The present matter relates to email messages and in particular to receiving a call related to an urgent email and displays the content of the email during the call.

### BACKGROUND

People often receive messages and phone calls on communication devices. Messages can be, for example, email messages, SMS, or instant messages (IM), etc. Phone calls and messages can be from the same individual and can include related subject matter.

### BRIEF DESCRIPTION OF THE DRAWINGS

In order that the subject matter may be readily understood, embodiments are illustrated by way of examples in the accompanying drawings, in which:
**Figure 1** is a block diagram illustrating a telecommunication infrastructure;
**Figure 2** is a block diagram illustrating components of a communication device;
**Figure 3** is a schematic diagram illustrating an address book with address book entries;
**Figure 4** is a block diagram illustrating an address book entry in isolation;
**Figure 5** is a block diagram illustrating an email message interface;
**Figure 6** is a block diagram showing an urgent email module communicating with an email application, a phone module and an address book;
**Figure 7** is a block diagram of the display of a mobile device showing a received call number;
**Figure 8** is a block diagram of the display of a mobile device showing contact information and message information; and
**Figure 9** is a flowchart illustrating a method of displaying the content of a message when receiving a related call at a communication device.

For convenience, like numerals in the description refer to like structures in the drawings.

### DETAILED DESCRIPTION

Disclosed is a method of displaying message information associated with a message when receiving a call at a device comprising: receiving the call at the device from a caller; receiving caller information at the device in association with the call; automatically retrieving from storage, in response to receiving the caller information, at least one message, the at least one message comprising text content; and automatically displaying on a display screen message information associated with the at least one message

According to another aspect, disclosed is a communications device having a processor and memory, the memory storing instructions and data for execution by the processor to configure the device to: receive the call at the device from a caller; receive caller information at the device in association with the call; automatically retrieve from storage, in response to receiving the caller information, at least one message, the at least one message comprising text content; and automatically display on a display screen message information associated with the at least one message.

According to another aspect, disclosed is a computer readable medium having recorded thereon statements and instructions for execution by a computer to configure a device to carry out a method of displaying message information associated with a message when receiving a call at a device, the method comprising: receiving the call at the device from a caller; receiving caller information at the device in association with the call; automatically retrieving from storage, in response to receiving the caller information, at least one message, the at least one message comprising text content; and automatically displaying on a display screen message information associated with the at least one message.

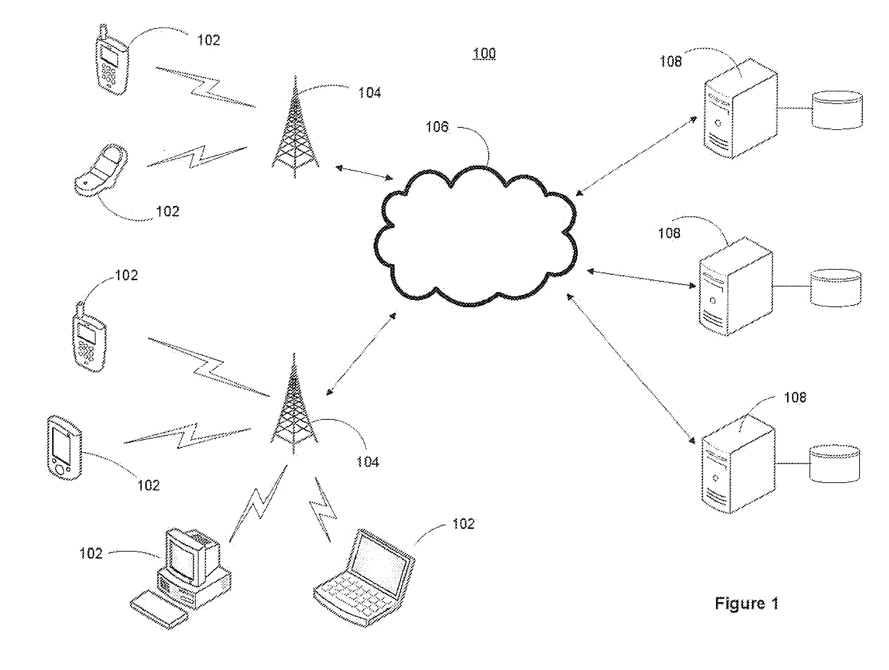

Referring to Figure 1, a typical telecommunication infrastructure is illustrated generally by numeral 100. The telecommunication infrastructure 100 includes a plurality of communication devices 102, a plurality of base stations 104, a communication network 106 and a plurality of network servers 108.

The communication devices 102 include wireless computing devices such as a smart phone, a personal digital assistant (PDA), a laptop and the like as well as wired computing devices such as a desktop computer. The communication devices 102 are in communication with one of the base stations 104. The base stations relay data between the communication devices 102 and the network servers 108 via the communication network 106. Accordingly, the communication network 106 may include several components such as a wireless network, a relay, a corporate server or a mobile data server or both for relaying data between the base stations 104 and the network servers 108.

The network servers 108 include servers such as a Web server, an application server 108, and an application server with web services. It will be appreciated by a person of ordinary skill in the art that the telecommunication infrastructure 100 described herein is by way of example and that changes may be made to one or more components to accommodate different network configurations without affecting the scope of the aspects described herein.

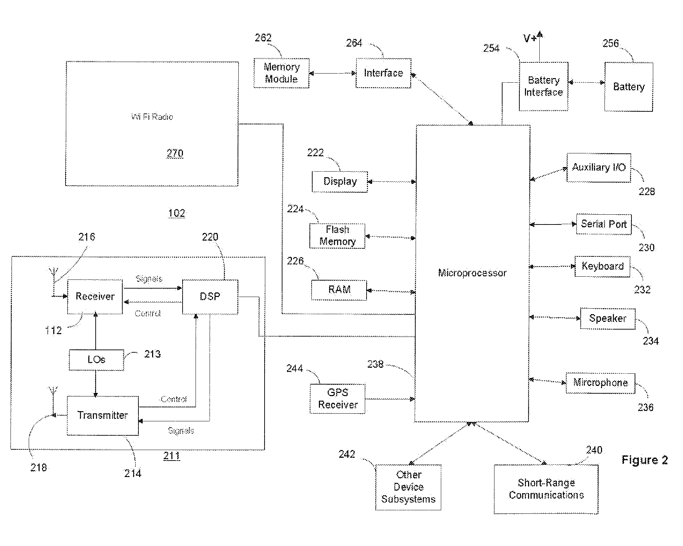

Referring to Figure 2, a typical communication device 102 is illustrated in greater detail. The communication device 102 is often a two-way communication device having both voice and data communication capabilities, including the capability to communicate with other computer systems. Depending on the functionality provided by the communication device 102, it may be referred to as a data messaging device, a two-way pager, a cellular telephone with data messaging capabilities, a wireless Internet appliance, or a data communication device. The communication device 102 can, for example, be a mobile device.

The communication device 102 includes a communication subsystem 211, which includes a receiver 212, a transmitter 214, and associated components, such as one or more embedded or internal antenna elements 216 and 218, local oscillators (LOs) 213, and a processing module such as a digital signal processor (DSP) 220. As will be apparent to those skilled in the field of communications, the particular design of the communication subsystem 211 depends on the communication network in which communication device 102 is intended to operate.

The communication device 102 includes a microprocessor 238 which controls general operation of the communication device 102. The microprocessor 238 also interacts with additional device subsystems such as a display 222, a flash memory 224, a random access memory (RAM) 226, auxiliary input/output (I/O) subsystems 228, a serial port 230, a keyboard 232, a speaker 234, a microphone 236, a short-range communications subsystem 240 such as Bluetooth™ for example, and any other device subsystems or peripheral devices generally designated at 242. The communication device 102 may also include a positioning device 244, such as a GPS receiver, for receiving positioning information. A second radio, such as a WiFi radio 270 may also be provided.

Operating system software used by the microprocessor 238 is preferably stored in a persistent store such as the flash memory 224, which may alternatively be a read-only memory (ROM) or similar storage element (not shown). Those skilled in the art will appreciate that the operating system, specific device applications, or parts thereof, may be temporarily loaded into a volatile store such as RAM 226.

The microprocessor 238, in addition to its operating system functions, preferably enables execution of software applications on the communication device 102. A predetermined set of applications, which control basic device operations, is installed on the communication device 102 during its manufacture. These basic operations typically include data and voice communication applications, for example. Additionally, applications may also be loaded onto the communication device 102 through the network 106, an auxiliary I/O subsystem 228, serial port 230, short-range communications subsystem 240, or any other suitable subsystem 242, and installed by a user in RAM 226, or preferably the persistent store 224, for execution by the microprocessor 238. Such flexibility in application installation increases the functionality of the communication device 102 and may provide enhanced on-device features, communication-related features, or both.

The display 222 is used to visually present an application's graphical user interface (GUI) on the device 102. Application data can be manipulated by modifying information on the GUI using an input device such as the keyboard 232 for example. Depending on the type of communication device 102, the user may have access to other types of input devices, such as, for example, a scroll wheel, trackball, light pen or touch sensitive screen.

Location-based applications executing on the communication device 102 use positioning information from the positioning device 244 to provide relevant information to the user, often in real-time. The positioning device 244 may be a GPS receiver for receiving satellite broadcasts. In one embodiment, the satellite broadcast data is used by the communication device 102 to determine its position. In another example, received satellite broadcast data is transmitted from the communication device 102 to one of the network servers 108 to determine the position of the communication device 102.

Alternatively, the positioning device 244 may be a positioning module for receiving positioning information from one of the network servers 108. In this embodiment, the positioning module may comprise a software solution, rather than a hardware solution.

### Address Book

The address book 300 can be an application in or a component of a Personal Information Manager (PIM). PIMs are applications on computing devices (e.g. device 102) and are used as personal organizers. PIMs can include a number of components such as calendars, contact listings (e.g. address book 300), email archives, reminders, etc. Other components included in a PIM are known to persons of ordinary skill in the art. PIM software can allow for PIM components to be synchronized with information stored on a remote database or on another device 102 that may also use PIM software. Information stored in PIM components can therefore be stored locally or remotely.

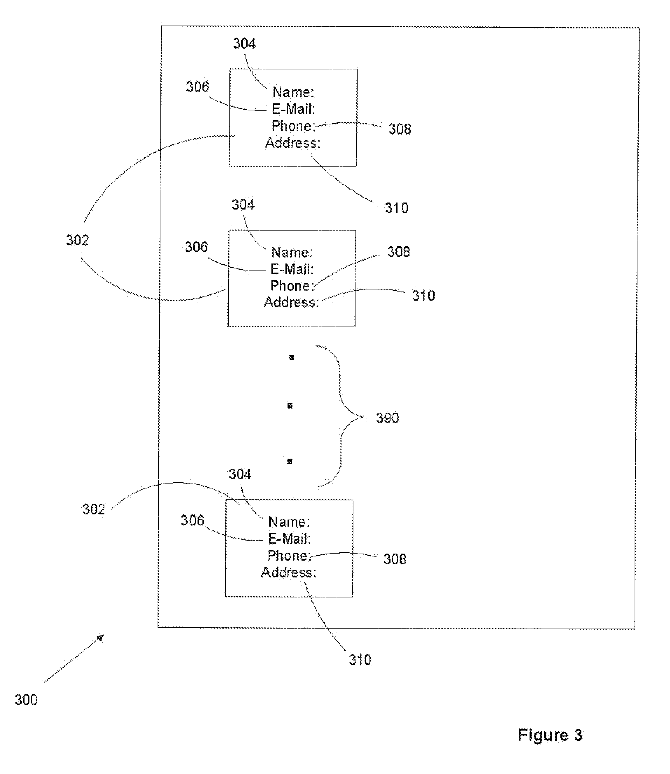

Figure 3 shows a schematic diagram of an embodiment of the address book 300. The address book 300 stores contact information for individuals or organizations. The address book 300 comprises address book entries 302. The ellipses 390 are shown to indicate that a number of additional address book entries 302 that are not directly shown in Figure 3 can be included in the address book 300. According to an embodiment, each address book entry 302 has a name field 304, and email field 306, a phone number field 308 and an address field 310. Entries or information can be stored or displayed in association with each of the name field 304, the email field 306, the phone number field 308 and the address field 310. It is recognized that address book entries 302 may have additional information or fields not shown in the Figures, such as a photograph or other text-based information.

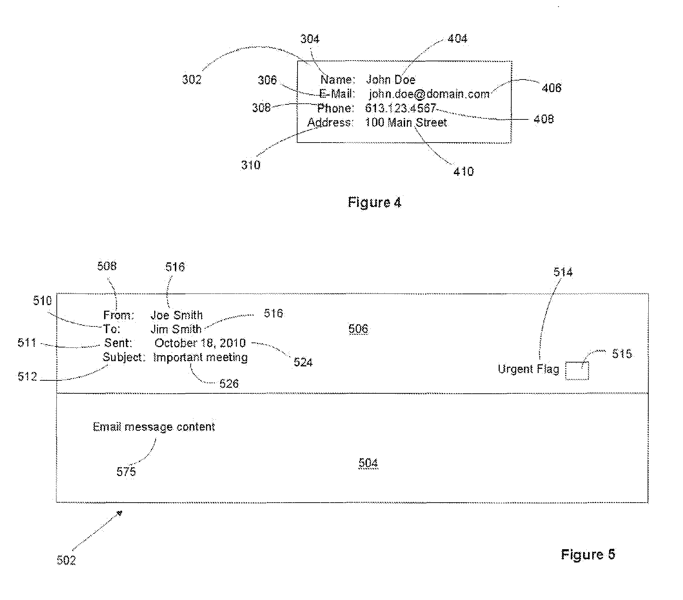

Figure 4 shows a schematic diagram of an embodiment of an individual address book entry 302. The address book entry 302 includes a name entry 404 (e.g. John Doe), an email entry 406 (e.g. john.doe@domain.com), a phone number entry 408 (e.g. 613.123.4567) and an address entry 410 (e.g. 100 Main Street). The name entry 404 is stored in association with the name field 304; the email entry 406 is associated with the email field 306; the phone number entry 408 is associated with the phone number field 308; and the address entry 410 is associated with the address field 310. Each of these entries can be stored in memory on the device in association with the respective field. Alternatively, the entries can be stored on a remote storage such as in a remote database or on a separate device 102.

Each entry (404, 406, 408, 410) can be edited using an input and an interface familiar to skilled persons. Similarly, the email entry 406, phone number entry 408 and the address entry 410 can each be deleted or created. The email entry 406, the phone number entry 408 and the address entry 410 are optional. For example, an address book entry 302 may only include a name entry 404.

It is recognized that there may be more than one entry (e.g. 404, 406, 408, 410) for each field (304, 306, 308, 310). When a new address book entry 302 is created a user may be prompted to enter the name of the contact into the name field 304. An address book entry 302 can comprise other types of entries relating to the specific contact, individual or organization.

The contact information can be viewed, edited, created or deleted through an interface on the device 102. For example, the display of the address book 300 can be initiated (e.g. by selecting an icon on a home screen, for example) in order to view (or edit) each of the address book entries 302. Each address book entry 302 can then be individually selected for viewing (or editing). Further, contact information for address book entries 302 can be automatically entered into the address book 300. For example, an email message that includes a person's contact information can be received at the device 102. The PIM can then be instructed to create a new address book entry 302 for the contact from the email message.

### Email Application

An email application 604 is a program executing on a device 102 that manages the email operations of the device 102. For example, the email application provides interfaces through which email messages can be accessed, created, modified, sent, received or searched. The email application can use various email protocols such as IMAP or POP3, for example. The email application program can be part of a PIM, for example. Received emails can be stored in a local and/or remote database, which can then be synchronized together with the device 102. The email application can communicate with the database in order to access, search or extract the stored emails. The device 102 can be configured to locally store or maintain in storage (e.g. in memory) only the most recently received or sent email(s). For example, emails sent or received within the past three weeks can be stored on the device 102 and accessible to the email application program. Time frames of durations other than the past three weeks can be used and can also be set or selected either manually (e.g. through the interface) or automatically. Similarly, the device 102 can be configured to locally store emails sent or received from particular people or emails sent and received that are flagged as urgent.

Figure 5 shows a schematic diagram of a received email 502 on a display of a device 102. The email 502 has a header section 506 and a content section 504. The header 506 includes fields such as "from" 508, "to" 510, "sent" 512 and "subject" 512. The "from" 508 and "to" 510 fields can each include at least one email address 516 of the sender and recipient(s), respectively. The "sent" 511 field indicates the date and time 524 when the email message 502 was sent. The "subject" field 512 can include a description (e.g. which can be receive as input to the device) of the subject of the email content 575 and/or descriptions of any files attached to the email 502, for example. The email content 575 can be text, XML, HTML, or other types of data. Email messages 502 can also include attachments or attached files (not shown).

Each email 502 can include an "urgent flag" 514 field which can be used to indicate that the email message 502 is urgent. Before sending the email message 502 the "urgent flag" 514 can be set to indicate to the recipient(s) that the email message 502 of an urgent nature. The "urgent flag" 514 field may include an option to select or set the "urgent flag" 514 to indicate that the email message 502 is urgent. For example there may be a check box 515 that can be selected (or deselected) through input to the interface. A received email message 502 that is marked as urgent (i.e. has the "urgent flag" 514 selected or set) may be differentiated from other email messages 502 by colour or another indication (e.g. a flag or exclamation point displayed in association with the email). Similarly, other flags can be associated with email messages 502 such as a flag indicating that an email 502 is confidential or a flag indicating that an email 502 is not important.

According to an alternative embodiment, text in the content section 504 or header section 506 (e.g. the subject field 512) may be used to indicate that an email 502 is urgent. For example, the phrase "URGENT" written in the subject field 512 of an email may indicate that the email 502 is urgent. When an email is received at a mobile device 102 there can be an application on the mobile device 102 that parses the email 502 to determine whether the phrase "URGENT" appears in the subject field 512 of the email and, if so, then the email 502 is considered urgent. Similar text written in the content section 504 or header section 506 of the email 502 can be used to indicate that an email is urgent.

According to an embodiment, when the address book entry 302 that has an email entry 406 in the email field 306 is being displayed the email entry 406 can be selected. When the email entry 406 is selected, the email application initiates an interface that allows for the creation and transmission of a new email message 502 to that selected email entry 406. For example, the "to" filed 510 of the header of the new email can be automatically filled in with the email entry 406. The content section 504 and remainder of the header sections 506 of the new email can then be manually filled in before transmitting or communicating the email.

### Modules

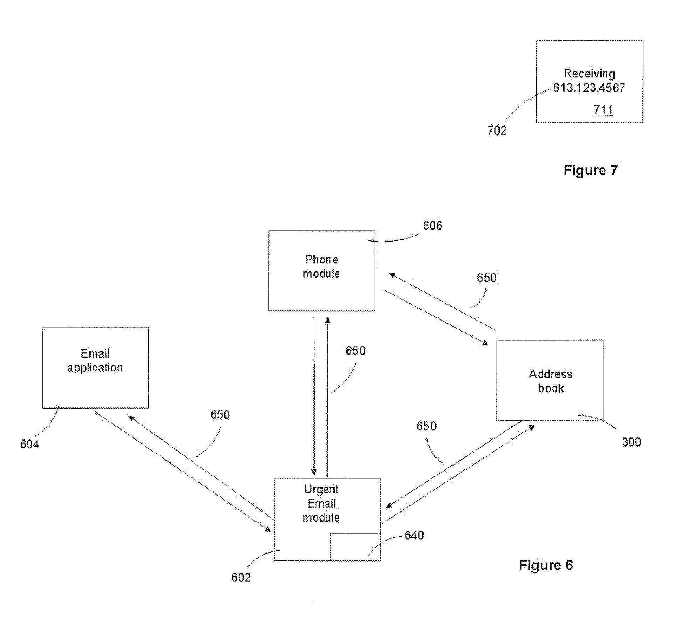

Figure 6 shows a block diagram of an urgent email module 602 communicating with the email application 604, a phone module 606 and the address book 300. For example, the urgent email module 602 can send and receive data or information for processing and/or storing from each of the email application 604, the phone module 606 and the address book 300. Further, the phone module 606 can communicate with the address book 300 in order to send or retrieve data therefrom. This data communication is shown in Figure 6 by the arrows 650.

### Phone Module 606

According to an example, the phone module 606 is an application executing on a communication device 102. The phone module 606 controls the operation of phone calls placed and/or received using the device 102. For example, with reference to Figure 6, a phone module 606 can be used to undertake phone calls (e.g. to send or receive calls) on a device 102. Further, the phone module 606 may be used to transmit phone number information from the device 102 to initiate or place a call to a second device.

To initiate a call, input is received to dial a number using the input of a communication device 102. A number to dial can be received through a voice input or a manual selection (e.g. touch screen input or keyboard input). By way of further example, input can be received to select the phone number entry 408 from an address book entry 302 on the device 102 in order to initiate a call to the phone number of the phone number entry 408. The phone module 606 will then initiate a phone call to the phone number listed as the phone number entry 408. The phone module 606 can receive this input number and display it on the interface of the device 102.

Similarly, when a call is received at a device 102, the phone module 606 can display the calling number on the interface of the device 102. Figure 7, for example, shows a schematic diagram of a display 711 of a device 102 when the device 102 is receiving a phone call. When a phone call is received at the device 102, the calling number 702 can be automatically transmitted over the network 106 to the phone module 606 of the device 102. For example, services such as "caller ID" can be used to provide data to a device in associated with a voice transmission (i.e. a phone call). It is recognized that the caller may optionally restrict the transmission of the calling number 702 to the device 102 when a call is placed. The phone module 606 can display the calling number 702 on the display 711 of the device 102 when the call is received or while the call is in progress.

It is recognized that other information from the caller can be displayed on the display 711 of the device 102. For example, when a call is received at the device 102 along with caller information (e.g. a calling phone number), the caller information can be used by the phone module to retrieve contact information for the caller from the address book 300. If the caller information is a calling phone number, for example, the phone module 606 communicate 650 the calling phone number to the address book 300 in order to retrieve contact information that is in the same address book entry 302, if one exists, as the calling phone number. The retrieved contact information (e.g. a photograph, email or name) can then be displayed on the display 711 of the device 102 during the phone call. Alternatively, caller information other than a phone number can be directly transmitted to the device 102 and displayed on the display 711 of the device during the phone call.

### Urgent Email Module 602

The urgent email module 602 is an application executing on a device 102 and may, for example, be part of the PIM.

The urgent email module 602 can communicate with the phone module 606 in order to extract or read received calling numbers 702 during a call or when a call is first received at a device 102 (i.e. before the call is answered on the device 102). For example, the urgent email module 602 can extract (such as via an application programming interface (API) or other manner) the calling number 702 and store it in memory on the device 102.

The urgent email module 602 communicates with the address book 300 (e.g. via an API) in order to search through address book entries 302. For example, the urgent email module 602 can read or process individual entries (e.g. the name entry 404; email entry 406; phone number entry 408; or address entry 410) in each address book entry 302. Further, the urgent email module 602 can extract the email entry 406 from the address book entry 302. For example, the urgent email module 602 can search the address book 300 for a phone number entry 408 that matches to the calling number 702 of a received call. If an address book entry 302 with the matching phone number entry 408 is found, an email address entry 406 of that address book entry 302 can then be extracted.

The urgent email module 602 can communicate with the email application 604 (e.g. via an API) in order to access, search through or extract stored email messages 502 from the device 102 (or, alternatively, from a remote database). For example, the urgent email module 602 can instruct the email application 604 to search through the header section 506 or content section 504 of stored email messages 502 using one or more search parameters such as a sender email address, from date, whether the urgent flag 514 is set and whether the text of either the content section 504 or header section 506 contains phrases or words indicating that the email message 502 is urgent. Further search parameters could include, for example, a time period within which the emails 502 were sent (e.g. emails sent from a particular person within the last three weeks) and specific phrases in the content 575 of the email 502. It is recognized that, according to an alternative embodiment, the urgent email module 602 can directly access, search through or extract stored email messages 502 from the device 102, from a separate device 102 or from a remote database.

By way of further example, the urgent email module 602 can instruct the email application 604 to search through stored emails 502 using an extracted email address entry 406 as a search parameter. The email application 604 would then provide the urgent email module 602 with all stored emails 502 from the extracted email address. Further, the urgent email module 602 can instruct the email application 604 to search through stored emails 502 using an extracted email address entry 406 as a search parameter as well as whether the urgent email 514 flag is set as a search parameter. The email application 604 would then provide the urgent email module 602 with all stored emails from the extracted email address and which have the urgent email 514 flag selected. Similarly, the urgent email module 602 can instruct the email application 604 to restrict the search to the most recent stored email 502 that otherwise satisfies the search parameters.

The urgent email module 602 can extract message information from messages 502 either received from the email application 606 or obtained directly from a stored message database. Message information can include, for example, the message content section 504 or message header 506 information (e.g. subject entry 526). The urgent email module 602 can display the message information on a display screen. For example, display screen can be on a PC or a desktop computer. The urgent email module 602 can be in communication with a separate device (e.g. a PC or desktop computer) that comprises the display screen on which the message information is displayed. By way of further example, the display of the device 102 comprises the display screen on which the message information is displayed. For example, the urgent email module 602 can be programmed to display the content 575 of the most recent email message 502 received from the email address associated with an incoming calling number 702 of an incoming call. The urgent email module 602 can display the message information on the display screen of the same device 102 on which the incoming call is received. Alternatively, the urgent email module 602 can display the message information on a display screen that is not located on the device 102 on which the incoming call is received.

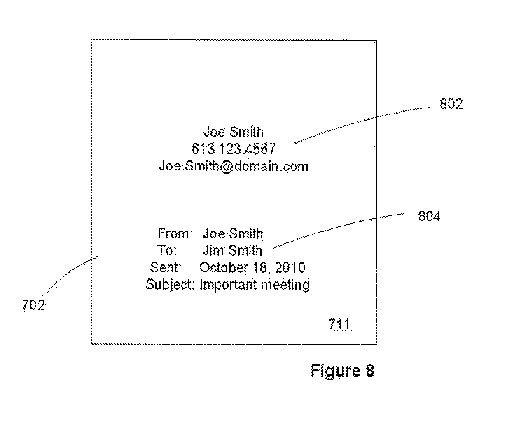

An alternative embodiment is shown in Figure 8. The display 711 shows retrieved contact information 802 and retrieved message information 804 for an urgent message received from the caller. The urgent email module 602 displays the message information 804 on the display 711 at the same time that the contact information 802 is displayed. The contact information 802 can be a phone number, name, photograph, address, email address or any combination thereof, for example.

In another example, the urgent email module 602 comprises a storage 640 (e.g. memory) for storing messages 502 in association with phone numbers or in association with other entries from the address book entries 302. The urgent email module 602 can extract message content 575 from messages 502 that are urgent (e.g. that have the urgent email 514 flag selected) from the email application 606. Similarly, the urgent email module 602 can extract messages 502 that are urgent from the email application 606. Alternatively, the email application 606 can communicate urgent messages 502 or content 575 from urgent messages 502 directly to the urgent email module 602. The urgent email module 602 can then store these messages 502 or message content 575 in storage 640 for later retrieval.

The urgent email module 602 can communicate with the address book 300 in order to extract the address book entry 302 that has an email address entry 406 that matches the sender email address 516 of the message(s) 502 stored in storage 640. Further, the urgent email module 602 might only extract one entry from the address book entry 302, such as the phone number entry 408, that has an email address entry 406 that matches the sender email address 516 of the message(s) 502 stored in storage 640. The urgent email module 602 can then store urgent messages 502 in association with phone numbers (e.g. from the phone number entry 408) of the sender of the urgent message 502 in storage 640. The urgent email module 602 can be programmed to display the message content 575 from an urgent message 502 extracted from storage 640 that was sent from the email address associated with an incoming calling number 702. The urgent email module 602 can be programmed to extract from storage 640 and display the content 575 of the most recent urgent email message 502 received from the email address associated with an incoming calling number 702.

By way of alternative, the message information extracted by the urgent email module 602 and displayed on the display screen can comprise a list of only unread messages 502, the 'N' most recent emails (where 'N' is an integer), only emails that was received at the device 102 within a specific time period before the call is received at the device 102, only resent emails, etc.

### In Operation

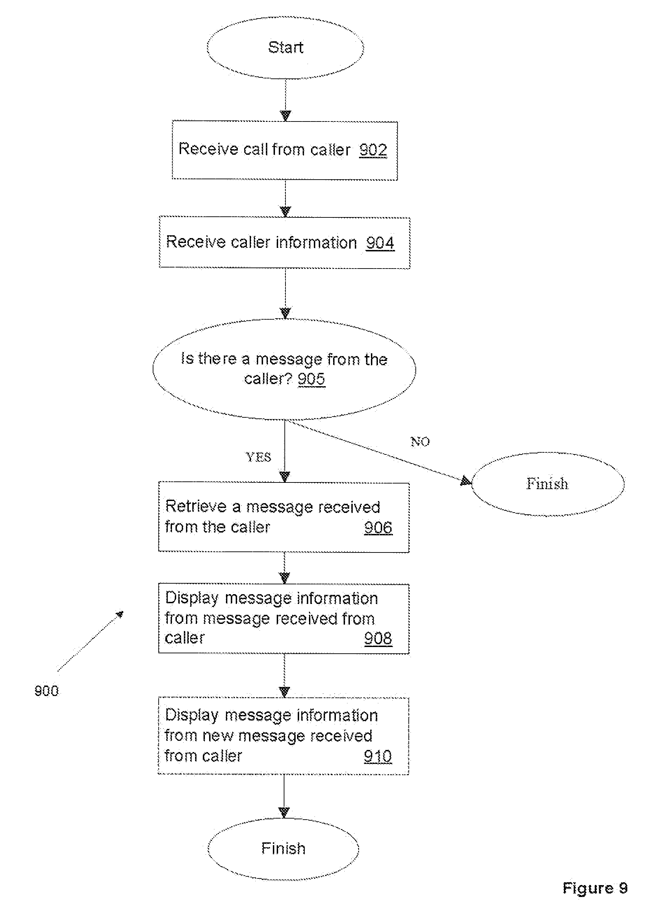

Figure 9 is a flow chart showing a method 900 of displaying message information for a message 502 when receiving a related call at a device 102. The message 502 can be, for example, an email message, an SMS message, or other types of data transfer between devices 102 (e.g. messages posted on a social networking website). The message information can be displayed on a display screen, for example. The display screen can be on the device 102 or separate from the device 102 (e.g. on a different device 102).

At step 902, a phone call is received from a caller. The call can be received at the device 102, for example.

At step 904, caller information is received at the device 102 in association with the received phone call. For example, the caller can be identified using the caller information. According to an example, the phone module 606 receives caller information. The caller information can be, for example, the phone number 702 of the caller. The phone number 702 of the caller can be transmitted to the device 102 in association with or to initiate the phone call. The urgent email module 602 then compares the transmitted phone number 702 with the phone numbers listed as phone number entries 408 in the address book entries 302 of the address book 300 on the device 102. If the transmitted phone number 702 is identical to a phone number entry 408 in a particular address book entry 302, then the caller is identified as the name entry 404 for that address book entry 302. For example, the urgent email module 602 compares the transmitted phone number 702 with the phone numbers listed in the phone number entries 408 in the address book 300 and, if there is a match, retrieves the email address (i.e. in the email address entry 406) for the address book entry 302 of the matched phone number.

At step 905, a determination is made as to whether there is at least one message 502 on the device 102 or on a remote database from the identified caller. For example, the urgent email module 702 can search the email messages 502 on the device 102 (or on the remote database or on a separate device 102) to determine whether any email messages 502 are received from the identified caller.

If at least one message from the identified caller is found, then, at step 906, the at least one message from the identified caller is retrieved from the device 102 or from the remote database of messages. For example, the at least one message 502 can be automatically retrieved from storage in response to receiving the caller information. The storage can be on the device 102 or remote from the device. As such, the caller information is used to retrieve the at least one message from the device 102 or from the remote database. The at least one message 502 can, for example, be an email message and can be retrieved from the email application 704 on the device 102. The urgent email module 702 can, for example, search the email messages 502 on the device 102 (or on the remote database) for the email messages received from the identified caller. By way of further example, the at least one message retrieved from the device 102 or from the remote database can be an urgent message received from the caller, the most recent message received from the caller or the most recent urgent message received from the caller. Further the at least one message can comprise a plurality of messages.

At step 908, message information from the at least one retrieved message is displayed on a display screen. The message information can be automatically displayed on the display screen, for example. The display screen can be on the device 102. For example, the message information may be content 575 of an email message. Accordingly, content 575 of the most recent message 502 received from the caller can be displayed on the device 102 for at least a portion of the duration of the phone call. The content 575 displayed on the device 102 may be only a portion of the content 575 of the message 502. By way of further example, the message information can comprise header 504 information such as the subject entry 526 of an email message. Accordingly, a list of subject entries 526 of email messages from the caller can be displayed on the device 102 for at least a portion of the duration of the phone call. It is recognized that the display screen can be on a separate device 102 from that which receives the incoming phone call.

The message information can be further restricted to a list of messages that are urgent (e.g. for which the urgent flag 514 is set) or to the message content 575 of the most recent urgent message 502. Further, the message information can be an urgent message received from the caller, the most recent message received from the caller or the most recent urgent message received from the caller. According to another example, the at least one message retrieved from the device 102 or from the remote database can be a plurality of messages and the message information can comprise the header information 506 for each message 502. The header information 506 can be displayed on the display screen in a list, for example.

It is recognized that message information from messages 502 that were not sent from caller can be displayed during the call. For example, message information from the most recent urgent message 502, regardless of the identity of the sender of the message 502, can be displayed on the display screen (e.g. on the device 102) during the call.

Optionally, at step 910, if a new message 502 is received from the caller during the call, message information from that new message 502 can be displayed on the display screen (e.g. on the device 102).

According to a further example, the at least one message may be received after the call is received.

According to another example, the message 502 is an SMS message. The urgent email module 602 can retrieve the content of the SMS message in response to receiving the phone call. For example, caller information (i.e. the caller's phone number) received at the device 102 in association with the call can be used to retrieve the content of the SMS message (if there is one from the caller). For example, the phone number from the caller can be used to search through SMS messages to retrieve SMS messages from the phone number. The content of the retrieved SMS message(s) can then be displayed on the device 102. In a further example, the message 502 is an IM message and can similarly be retrieved for display in response to a received call. When the message 502 is an IM message, the caller information can be an IM username or identity, for example, which can be used to retrieve the IM message 502.

It will be apparent to persons skilled in the art that a number of variations and modifications can be made without departing from the scope of what is defined in the claims.

## Claims

1. A communications device (102) having a processor (238) and memory (224, 226), the memory storing instructions and data for execution by the processor to configure the device to display message information associated with a message when receiving a call by configuring the device to:
receive the call at the device from a caller;
receive caller information at the device (102) in association with the call;
automatically retrieve from storage, in response to receiving the caller information, at least one message (502), the at least one message comprising text content; and
automatically display on a display screen (711) message information associated with the at least one message.

2. The communications device of claim 1 wherein the at least one message (502) comprises an urgent message received from the caller.

3. The communications device of any one of claims 1 or 2 wherein the message information comprises content (575) of the at least one message (502).

4. The communications device of any one of claims 1 to 3 wherein the at least one message (502) comprises at least one of a most recently received message from the caller, a message that arrived within a specific time period before the call is received at the device (102), a plurality of messages with the message information comprising header information (506) of each message, an email message, an SMS message or an IM message.

5. The communications device of any one of claims 1 to 4 wherein the caller information is used to retrieve the at least one message (502).

6. The communications device of any one of claims 1 to 5 wherein the caller information comprises at least one of is an email address (516), IM address and phone number

7. The communications device of any one of claims 1 to 6 wherein the caller information is displayed on the display screen (711) along with the message information.

8. A method of displaying message information associated with a message when receiving a call at a device comprising:
receiving the call at the device from a caller;
receiving caller information at the device (102) in association with the call;
automatically retrieving from storage, in response to receiving the caller information, at least one message (502), the at least one message comprising text content; and
automatically displaying on a display screen (711) message information associated with the at least one message.

9. The method of claim 8 wherein the at least one message (502) comprises an urgent message received from the caller.

10. The method of any one of claims 8 or 9 wherein the message information comprises content (575) of the at least one message (502).

11. The method of any one of claims 8 to 10 wherein the at least one message (502) comprises at least one of a most recently received message from the caller, a message that arrived within a specific time period before the call is received at the device (102), a plurality of messages with the message information comprising header information (506) of each message, an email message, an SMS message or an IM message.

12. The method of any one of claims 8 to 11 wherein the caller information is used to retrieve the at least one message (502).

13. The method of any one of claims 8 to 12 wherein the caller information comprises at least one of is an email address (516), IM address and phone number

14. The method of any one of claims 8 to 13 wherein the caller information is displayed on the display screen (711) along with the message information.

15. A computer readable medium having recorded thereon statements and instructions for execution by a computer (102) to configure the device to perform the method of any one of claims 8 to 14.

## Amended claims

### Amended claims in accordance with Rule 137(2) EPC.

**1.** A communications device (102) having a processor (238) and memory (224, 226), the memory storing instructions and data for execution by the processor to configure the device to display message information associated with a message when receiving a call by configuring the device to:
receive the call at the device from a caller;
receive caller information at the device (102) in association with the call;
automatically retrieve from storage, in response to receiving the caller information, at least one address book entry (302) -the at least one address book entry (302) comprising an email entry (406) associated with the caller information; and
automatically display, in an email application interface on a display screen (711), the email entry (406), the email entry (406) being selectable to allow for creation and transmission of a new email message to the selected email entry (406).

**2.** The communications device of claim 1 wherein the at least one address book entry (302) is retrieved in response to an urgent message received from the caller.

**3.** The communications device of any one of claims 1 or 2 wherein the message information comprises content (575) of at least one message (502).

**4.** The communications device of claim 3 wherein the at least one message (502) comprises at least one of a most recently received message from the caller, a message that arrived within a specific time period before the call is received at the device (102), a plurality of messages with the message information comprising header information (506) of each message, an email message, a Short Message Service message and an instant message.

**5.** The communications device of claim 4 wherein the caller information is used to retrieve the at least one message (502).

**6.** The communications device of any one of claims 1 to 5 wherein the caller information comprises an instant messaging address.

**7.** The communications device of any one of claims 1 to 6 wherein the caller information is displayed on the display screen (711) along with the email entry (406).

**8.** A method of displaying message information associated with a message when receiving a call at a device comprising:
receiving the call at the device from a caller;
receiving caller information at the device (102) in association with the call;
automatically retrieving from storage, in response to receiving the caller information, at least one address book entry (302), the at least one address book entry (302) comprising an email entry (406) associated with the caller information; and
automatically displaying, in an email application interface on a display screen (711), the email entry (406), the email entry (406) being selectable to allow for creation and transmission of a new email message to the selected email entry (406).

**9.** The method of claim 8 wherein the at least one address book entry (302) is retrieved in response to an urgent message received from the caller.

**10.** The method of any one of claims 8 or 9 wherein the message information comprises content (575) of at least one message (502).

**11.** The method of claim 10 wherein the at least one message (502) comprises at least one of a most recently received message from the caller, a message that arrived within a specific time period before the call is received at the device (102), a plurality of messages with the message information comprising header information (506) of each message, an email message, a Short Message Service message and an instant message.

**12.** The method of claim 11 wherein the caller information is used to retrieve the at least one message (502).

**13.** The method of any one of claims 8 to 12 wherein the caller information comprises IM address.

**14.** The method of any one of claims 8 to 13 wherein the caller information is displayed on the display screen (711) along with the email entry (406).
